(19) Europäisches Patentamt
European Patent Office
Office européen des brevets

(11) Veröffentlichungsnummer: **0 022 547**
**A2**

# (12) EUROPÄISCHE PATENTANMELDUNG

(21) Anmeldenummer: **80103894.4**

(22) Anmeldetag: **08.07.80**

(51) Int. Cl.³: **C 07 F 9/53**, C 07 F 9/32

(30) Priorität: **11.07.79 DE 2927914**

(43) Veröffentlichungstag der Anmeldung: **21.01.81**
**Patentblatt 81/3**

(84) Benannte Vertragsstaaten: **BE CH DE FR GB IT LI NL**

(71) Anmelder: **HOECHST AKTIENGESELLSCHAFT, Zentrale Patentabteilung Postfach 80 03 20, D-6230 Frankfurt/Main 80 (DE)**

(72) Erfinder: **Felcht, Utz-Helmut, Dr., Kaiserstrasse 99, D-6793 Bruchmühlbach (DE)**

## (54) Verfahren zur Herstellung von Epoxy-1-oxo-phospholanen sowie einige spezielle dieser Verbindungen.

(57) 1-Oxo-phospholane werden durch Umsetzung von 1-Oxo-phospholenen mit Chlor in Gegenwart von Chlorwasserstoff bindenden Basen im Molverhältnis von etwa 1:1:2 in Wasser, gegebenenfalls im Gemisch mit einem mit Wasser mischbaren inerten organischen Lösungsmittel, ohne Isolierung einer Zwischenstufe im Einstufenverfahren hergestellt. Die Verfahrensprodukte sind teilweise neue Verbindungen, welche als Zwischenprodukte auf verschiedenen Sachgebieten, z.B. der Herstellung von Katalysatoren für die Umwandlung von Isocyanaten in Carbodiimide, der Polymeren, von Hydraulikflüssigkeiten etc. Verwendung finden.

EP 0 022 547 A2

HOECHST AKTIENGESELLSCHAFT HOE 79/F 176 Dr. ME/Fr

Verfahren zur Herstellung von Epoxy-1-oxo-phospholanen sowie einige spezielle dieser Verbindungen

Die hier in Rede stehenden Epoxy-1-oxo-phospholane sind Verbindungen der allgemeinen Formeln Ia und Ib:

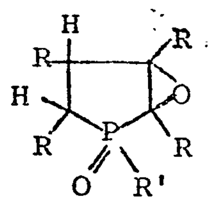

(Ia)

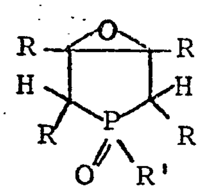

(Ib)

worin die Reste R, welche gleich oder verschieden sein können, Wasserstoff, organische Reste und/oder Halogen bedeuten und

R' ein organischer - gegebenenfalls über Sauerstoff gebundener organischer - Rest ist.

Die Verbindungen sind wertvolle Zwischenprodukte zur Herstellung der entsprechenden Dihydroxy-1-oxo-phospholane (vgl. z.B. SU-PS 225 187), die - in Polymere eingebaut - als wirksame Katalysatoren zur Umwandlung von Isocyanaten in Carbodiimide technische und wirtschaftliche Bedeutung besitzen (vgl. DE-OS 2 602 646). Außerdem können die Epoxy-1-oxo-phospholane auf die auch für andere phosphorhaltige Epoxide übliche Weise verwendet werden, z.B. als thermisch stabile Copolymere (vgl. US-PS 2 770 610), als Hydraulikflüssigkeiten (vgl. US-PS 2 826 592) und als Additive bei Vinylpolymeren (vgl. US-PS 2 956 369).

Zur Herstellung von Epoxy-1-oxo-phospholanen sind mehrere Verfahren bekannt, die sich im wesentlichen in zwei Reaktionstypen klassifizieren lassen.

A. Beim ersten Reaktionstyp werden 1-Oxo-$\Delta^3$-phospholene mit Persäuren in indifferenten Lösungsmitteln wie Äther, Chloroform etc. umgesetzt [SU-PS 212 258; B.A. Arbuzov et al. Jzv. Akad.Nauk. SSSR, Ser. Khim. (Engl. Transl.), 1968 (6), 1237 sowie L. Symes u. L.D. Quin, Tetrahedr. Lett. 1976 (22), 1853]; die Umsetzung läßt sich durch folgende Gleichung (1) wiedergeben:

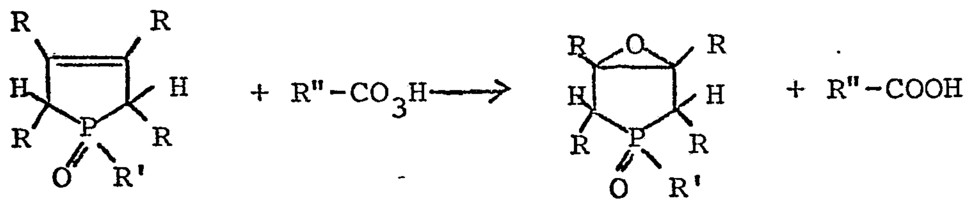


(1)

1-Oxo-$\Delta^3$-phospholen Persäure (Ib)

In den Formeln besitzen R und R' die vorstehend bei den Formeln Ia und Ib angegebene Bedeutung und R" bedeutet Wasserstoff oder einen organischen Rest.

Einer technischen Anwendung dieser Verfahrensweise stehen jedoch mehrere Nachteile entgegen. Einerseits ist die Handhabung von organischen Persäuren wie Peressigsäure, Perameisensäure etc. in organischen Lösungsmitteln wie Äther nicht ungefährlich und daher wegen der erforderlichen Sicherheitsmaßnahmen technisch relativ aufwendig (vgl. Houben-Weyl, Methoden der org. Chemie, G. Thieme Verlag Stuttgart 1963, Bd. VIII, S. 6 ff.). Andererseits ist diese Verfahrensweise aufgrund des erforderlichen Zeitaufwandes von 40 Stunden bis zu mehreren Tagen für die technische Darstellung von Epoxy-1-oxo-phospholanen kaum geeignet. Nachteilig ist außerdem, daß bei dieser Reaktion nur 1-Oxo-$\Delta^3$-phospholene, nicht aber 1-Oxo-$\Delta^2$-phospholene eingesetzt werden können [vgl. B.A. Arbuzov et al. Jzv.Akad.Nauk.SSSR,

Ser.Khim (Engl. Transl.) 1968 (6), 1237], obwohl bei technischen Verfahren zur Herstellung von 1-Oxo-phospholenen zumeist ein Gemisch aus den $\Delta^3$- und $\Delta^2$-Isomeren anfällt (siehe z.B. DE-PS 1 192 204 und DE-AS 20 36 173). Schließlich sind auch die hier erzielten Ausbeuten nicht immer ausreichend wirtschaftlich.

B. Der zweite Reaktionstyp zur Herstellung von Epoxy-1-oxo-phospholanen ist - ebenfalls ausgehend von 1-Oxo-phospholenen, allerdings hier sowohl von 1-Oxo-$\Delta^2$- als auch von 1-Oxo-$\Delta^3$-phospholenen - eine Zweistufensynthese, wobei in der ersten Stufe durch Addition von aus N-Bromacetamid in Wasser erzeugter unterbromiger Säure an die $\Delta^2$- bzw. $\Delta^3$-phospholene zunächst 1,2-Bromhydrine gebildet werden. Die anschließende Behandlung der Bromhydrine mit Basen in wasserfreien Lösungsmitteln liefert dann die gewünschten Epoxy-1-oxo-phospholane [vgl. D. G. Smith u. D.J.H. Smith, Tetrahedr. Lett. 1973 (15), 1249]; die Synthese läßt sich durch die folgenden Gleichungen 2a, 2b, 3a und 3b wiedergeben:

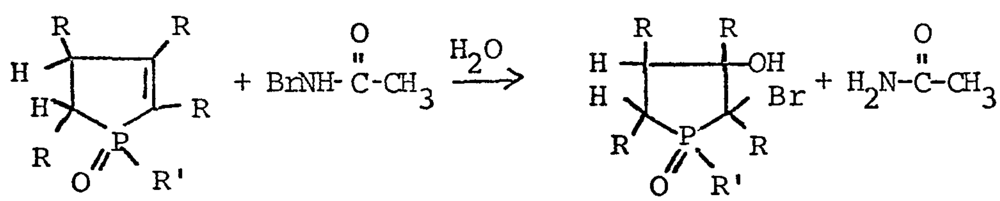


(2a)

1-Oxo-$\Delta^2$-phospholen  Bromhydrin

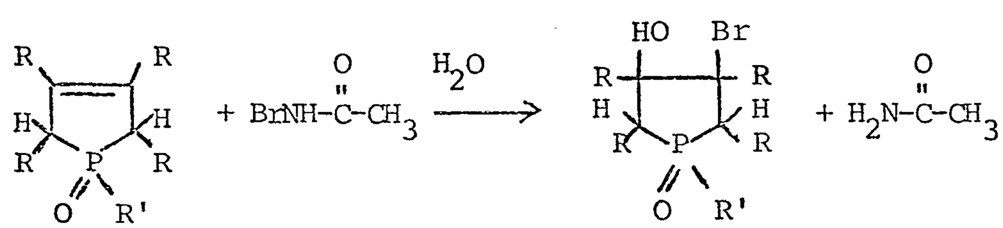


(2b)

1-Oxo-$\Delta^3$-phospholen  Bromhydrin

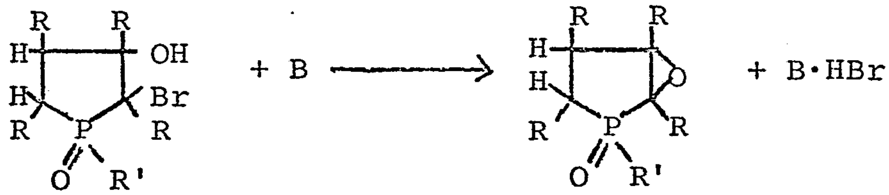


(Ia) (3a)

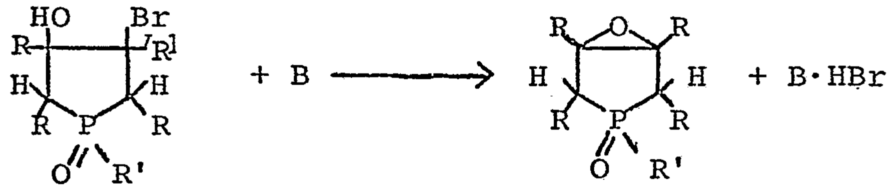


(Ib) (3b)

In den Formeln besitzen die Reste R und R' wiederum die gleiche Bedeutung wie eingangs bei den Formeln Ia und Ib angegeben; B steht für Halogenwasserstoff bindende Basen.

Für die technische Darstellung von Epoxy-1-oxo-phospholanen ist diese Verfahrensweise jedoch - ebenso wie das im vorhergehenden Abschnitt A geschilderte Verfahren - kaum geeignet. Einerseits ist eine Synthese über 2 Stufen unter Verwendung von organischen N-Brom-Verbindungen und die relativ lange Reaktionszeit von bis zu 20 Stunden nachteilig; andererseits sind die Ausbeuten von etwa 50 bis 80 % d.Th. (bezogen auf eingesetztes Phospholen) zwar nicht gerade schlecht, doch auch nicht in allen Fällen zufriedenstellend.

Es war daher wünschenswert und bestand die Aufgabe, ein einfacheres und wirtschaftlicheres Verfahren zu schaffen, welches sich außer auf die Herstellung von bekannten Epoxy-1-oxo-phospholanen auch auf die Herstellung anderer - neuer - Epoxy-1-oxo-phospholane anwenden läßt.

Diese Aufgabe konnte erfindungsgemäß ausgehend von 1-Oxo-phospholenen, dadurch gelöst werden, daß man 1-Oxo-phospholene mit Chlor in Gegenwart von Chlorwasserstoff bindenden Basen im Molverhältnis von etwa 1:1:2 in Wasser, gegebenenfalls im Gemisch mit einem mit Wasser mischbaren inerten organischen Lösungsmittel, ohne Isolierung einer Zwischenstufe im Einstufenverfahren umsetzt.

Die Umsetzung von Olefinen mit Chlor, Basen und Wasser zu 1,2-Epoxiden ist im Prinzip bekannt (vgl. R. Stroh in Houben-Weyl, Methoden der org. Chemie, G. Thieme Verlag Stuttgart, 1962, Bd. V/3, S. 768 ff. sowie G. Dittus, ibid, Bd. VI/3, S. 371 ff.) und läßt sich schematisch wie folgt darstellen (Gl. 4):

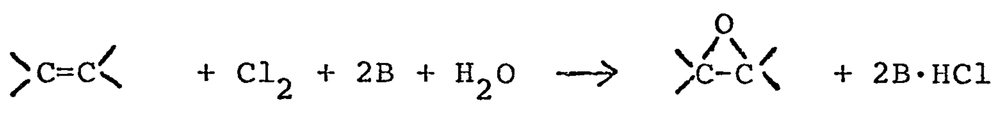


Olefin (B=Base) Epoxid

Es ist außerdem bekannt, daß diese Reaktion nur mit einer Reihe von Nebenreaktionen - wie z.B. der Bildung von 1,2-Dichlorverbindungen - abläuft. Es war daher außerordentlich überraschend, daß bei dem erfindungsgemäßen Verfahren sehr hohe bis nahezu quantitative Ausbeuten an den gewünschten Epoxy-1-oxo-phospholanen erhalten werden, ohne daß die Bildung entsprechender 2,3- bzw. 3,4-Dichlor-1-oxo-phospholane beobachtet wird. Dies ist umso mehr überraschend, als durch eigene Versuche gezeigt werden konnte, daß die Reaktion bei Verwendung von Brom anstelle von Chlor unter sonst gleichen Bedingungen ausschließlich die entsprechenden 2,3- bzw. 3,4-Dibrom-1-oxo-phospholane liefert.

Es war weiterhin überraschend, daß beim Einsatz solcher 1-Oxo-phospholene, welche am Phosphor eine Alkoxygruppe tragen, die dadurch gegebene Phosphinsäureesterfunktion

unter den wässrig-alkalischen Versuchsbeindungen nicht gespalten wird.

Besonders überraschend ist die sehr hohe bis nahezu quantitative Ausbeute auch deshalb, weil in Wasser als Lösungsmittel vor allem bei der Aufarbeitung 1,2-Epoxide sehr leicht durch Nebenreaktionen wieder zerstört werden (G. Dittus ibid. S. 376).

Als Ausgangsstoffe für das erfindungsgemäße Verfahren können im Prinzip alle möglichen 1-Oxo-phospholene verwendet werden; bevorzugt ist jedoch der Einsatz der unter den nachstehenden Formeln IIa und IIb fallenden Phospholene:

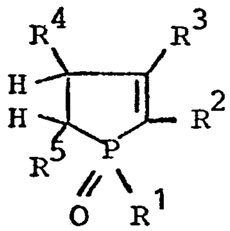 (IIa)

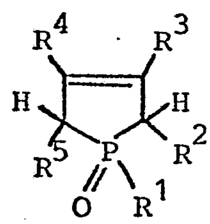 (IIb)

worin $R^1$ = $(C_1-C_{12})$-Alkyl, ggf. subst. durch Cl und/oder Br
$(C_1-C_{12})$-Alkoxy, ggf. subst. durch Cl und/oder Br
Cyclopentyl, Cyclohexyl, Phenyl, Naphthyl, Cyclopentoxy, Cyclohexoxy, Phenoxy, Naphthoxy } ggf. subst. durch $(C_1-C_4)$-Alkyl, $(C_1-C_4)$-Alkoxy, Cl und/oder Brom

$R^2$, $R^3$, $R^4$, $R^5$ = unabhängig voneinander H, $(C_1-C_4)$-Alkyl, $(C_1-C_4)$-Alkoxy, Phenyl, Cl, Br.

Besonders bevorzugte Ausgangsstoffe sind solche 1-Oxo-phospholene der Formeln IIa und IIb, in denen

$R^1$ = $(C_1-C_4)$-Alkyl, ggf. subst. durch Cl und/oder Br, $(C_1-C_4)$-Alkoxy, ggf. subst. durch Cl und/oder Br oder Phenyl,

$R^2$ = $R^5$ = H und

$R^3$, $R^4$ = unabhängig voneinander H, $CH_3$.

Beispielhafte 1-Oxo-phospholene der Formeln IIa und IIb sind:

1-Methyl-1-oxo-$\Delta^2(\Delta^3)$-phospholen,
1-Äthyl-1-oxo-$\Delta^2(\Delta^3)$-phospholen,
1-Propyl-1-oxo-$\Delta^2(\Delta^3)$-phospholen,
1-Butyl-1-oxo-$\Delta^2(\Delta^3)$-phospholen,
1-Phenyl-1-oxo-$\Delta^2(\Delta^3)$-phsopholen,
1-Chlormethyl-1-oxo-$\Delta^2(\Delta^3)$-phospholen,
1,3-Dimethyl-1-oxo-$\Delta^2(\Delta^3)$-phospholen,
1-Äthyl-3-methyl-1-oxo-$\Delta^2(\Delta^3)$-phospholen,
3-Methyl-1-phenyl-1-oxo-$\Delta^2(\Delta^3)$-phsopholen,
1,3,4-Trimethyl-1-oxo-$\Delta^2(\Delta^3)$-phospholen,
1-Äthyl-3,4-dimethyl-1-oxo-$\Delta^2(\Delta^3)$phospholen,
3,4-Dimethyl-1-phenyl-1-oxo-$\Delta^2(\Delta^3)$-phospholen, sowie
1-Methoxy-1-oxo-$\Delta^2(\Delta^3)$-phospholen,
1-Äthoxy-1-oxo-$\Delta^2(\Delta^3)$-phospholen,
1-Butoxy-1-oxo-$\Delta^2(\Delta^3)$-phospholen,
1-Phenoxy-1-oxo-$\Delta^2(\Delta^3)$-phospholen,
1-ß-Chloräthoxy-1-oxo-$\Delta^2(\Delta^3)$.phospholen etc.

Sie sind nach bekannten Verfahren zugänglich (K. Sasse in Houben-Weyl, Methoden der org. Chemie, G. Thieme Verlag Stuttgart, 1963, Bd. XII/1, S. 138 ff.; DE-AS 20 36 173; sowie H. Hasserodt, K. Hunger und F. Korte, Tetrahedr. Lett. 1963, 1563).

Es ist auch möglich, ein Gemisch der $\Delta^2$- und $\Delta^3$-isomeren phospholene einzusetzen; das erfindungsgemäße Verfahren

liefert dann ein Gemisch von 2,3- und 3,4-Epoxy-1-oxo-phospholanen.

Als Chlorquelle kommt vorzugsweise gasförmiges Chlor zur Verwendung, jedoch ist auch eine wässrige Lösung von Chlor anwendbar.

Als Chlorwasserstoff bindende Basen sind praktisch alle für diesen Zweck bekannten basischen Stoffe möglich; bevorzugt ist jedoch die Verwendung von Alkalihydroxiden, -carbonaten, -hydrogencarbonaten, Ammoniak und/oder niederen aliphatischen Aminen. Beispiele für solche Basen sind Natriumhydroxid, Kaliumhydroxid, Natriumcarbonat, Kaliumcarbonat, Natriumhydrogencarbonat, Ammoniak, Äthylamin, Diäthylamin, Triäthylamin, n-Butylamin, etc. Es kann sowohl einer dieser basischen Stoffe als auch ein Gemisch von 2 oder mehreren basischen Stoffen eingesetzt werden.

Brauchbare, mit Wasser mischbare, (gegenüber den Ausgangs- und Endverbindungen) inerte organische Lösungsmittel, die im Gemisch mit Wasser eingesetzt werden können, sind vorzugsweise niedere ($C_1$-$C_4$)-Alkohole, niedere aliphatische Ketone und/oder wasserlösliche Äther. Beispiele für solche Lösungsmittel sind Methanol, Äthanol, Propanol, Aceton, Dioxan etc.

Es ist besonders bevorzugt, Wasser als alleiniges Lösungsmittel (und Reaktionspartner) einzusetzen.

Das erfindungsgemäße Verfahren kann in einem relativ weiten Temperaturbereich durchgeführt werden. Allgemein wird im Temperaturbereich von etwa -10 bis +100°C, vorzugsweise zwischen etwa 0 und 50°C, gearbeitet. Die Reaktionsdauer liegt bei einigen Minuten. Im allgemeinen verläuft die Reaktion spontan unter leichter Erwärmung.

Eine Außenkühlung kann verwendet werden, ist jedoch nicht unbedingt erforderlich.

Das Verhältnis von Lösungsmittel zur Summe der Reaktionspartner kann in einem relativ weiten Bereich variiert werden. Allgemein wird ein Gewichtsverhältnis von etwa 1:1 bis etwa 20:1 (Lösungsmittel zur Summe der Reaktionspartner), bevorzugt ein Verhältnis von etwa 2:1 bis 6:1, verwendet. Im allgemeinen wird derart gearbeitet, daß die Lösung eines oder mehrerer Reaktionspartner vorgelegt und die übrigen Komponenten gleichzeitig oder nacheinander zugetropft werden. Bevorzugt wird das 1-Oxophospholen in Wasser oder einem Gemisch aus Wasser und einem damit mischbaren organischen Lösungsmittel vorgelegt und Chlor und die verwendete Base gleichzeitig zugegeben; besonders bevorzugt wird die Zugabe von Chlor und Base so vorgenommen, daß in der Reaktionslösung stets ein pH-Wert von etwa 3 bis 9 aufrecht erhalten wird. Es kann jedoch im Einzelfall gegebenenfalls auch eine andere Reihenfolge der Zugabe der Komponenten gewählt werden.

Bei der Reaktion werden die Reaktionspartner 1-Oxo-phospholen, Chlor und Base vorteilhaft im Molverhältnis von etwa 1:1:2 eingesetzt. Die 4. Reaktionskomponente Wasser liegt im allgemeinen im Überschuß vor, da sie außerdem als Lösungsmittel mit oder ohne damit mischbaren inerten organischen Lösungsmitteln verwendet wird.

Nach Beendigung der Reaktion wird die Reaktionslösung zweckmäßig neutralisiert.

Die Aufarbeitung des Reaktionsansatzes erfolgt nach bekannten Methoden. Bei wasserlöslichen Produkten wird das Lösungsmittel unter vermindertem Druck oder bei Normaldruck entfernt und der Rückstand durch Filtration oder Zentrifugieren vom Salzniederschlag befreit. Bei Produkten,

die sich direkt aus der Reaktionsmischung abscheiden oder extrahierbar sind, wird im allgemeinen eine Filtration mit oder ohne Druck oder eine Extraktion mit einem geeigneten organischen Lösungsmittel durchgeführt. Nach Entfernen des Lösungsmittels erhält man die gewünschten Epoxy-1-oxo-phospholane in reiner Form als farblose, zuweilen erstarrende Öle oder als kristalline Verbindungen.

In einigen Fällen kommt es auch zur Bildung von konfigurationsisomeren Epoxy-1-oxo-phospholanen, welche gewünschtenfalls aufgrund der verschiedenen makroskopischen Eigenschaften wie Löslichkeit, Polarität etc. durch bekannte Methoden wie z.B. Chromatographie getrennt isoliert werden können [vgl. D.G. Smith u. D.J.H. Smith, Tetrahedr. Lett. 1973 (15), 1249 und L. Symes u. L.D. Quin, Tetrahedr. Lett. 1976 (22), 1853]. Eine weitere Reinigung ist an sich nicht erforderlich, kann aber gewünschtenfalls nach bekannten Methoden wie Destillation unter vermindertem Druck, Umkristallisation oder Umfällen durchgeführt werden.

Wegen der Verwendung relativ einfacher Ausgangsprodukte, der einfachen Durchführung im Einstufenverfahren sowie den außerordentlichen hohen bis nahezu quantitativen Ausbeuten stellt das erfindungsgemäße Verfahren einen erheblichen Fortschritt dar. Außerdem sind etliche der Verfahrensprodukte neu.

Wenn als Ausgangsstoffe für das Verfahren 1-Oxo-phospholene der Formeln IIa und IIb verwendet werden, läßt sich das Verfahren formelmäßig wie folgt darstellen (Gleichungen 4a und 4b):

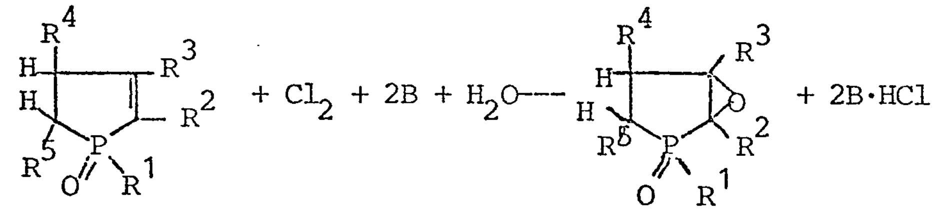


(IIa) (IIIa) (4a)

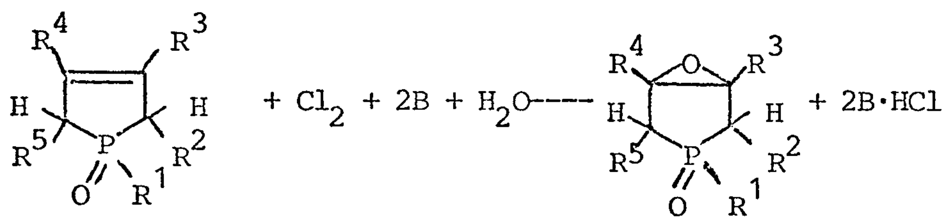


(IIb) (IIIb) (4b)

In den Formeln besitzen die Reste $R^1$ bis $R^5$ die vorher bei den Formeln IIa und IIb angegebene Bedeutung; B = Base.

Die Verfahrensprodukte der FormelnIIIa (= 2,3-Epoxy-1-oxo-phospholane) und IIIb (= 3,4-Epoxy-1-oxo-phospholane) sind neue Verbindungen mit Ausnahme der Fälle wenn

| | | | |
|---|---|---|---|
| $R^1 = CH_3$ | $R^2$-$R^5$ = H | | (bei IIIa) |
| $R^1 = OC_6H_5$ | $R^2$-$R^5$ = H | | " |
| $R^1 = OC_2H_5$ | $R^2 = CH_3$ | $R^3$-$R^5$ = H | " |
| $R^1 = OCH_3$ | $R^3 = CH_3$ | $R^2, R^4, R^5$ = H | " |
| $R^1 = OC_2H_5$ | $R^3 = CH_3$ | $R^2, R^4, R^5$ = H | " |
| $R^1 = OC_3H_7$ | $R^3 = CH_3$ | $R^2, R^4, R^5$ = H | " |
| $R^1 = OC_4H_9$ | $R^3 = CH_3$ | $R^2, R^4, R^5$ = H | " |
| $R^1 = C_6H_5$ | $R^3, R^4 = CH_3$ | $R^2, R^5$ = H | " |
| $R^1 = OC_6H_5$ | $R^3, R^4 = CH_3$ | $R^2, R^5$ = H | " |
| $R^1 = OC_2H_5$ | $R^3, R^4 = CH_3$ | $R^2, R^5$ = H | " |
| $R^1 = OC_4H_9$ | $R^3, R^4 = CH_3$ | $R^2, R^5$ = H | " |

| | | | |
|---|---|---|---|
| $R^1 = OC_2H_5$ | $R^3 = CH_3$ | $R^2, R^4, R^5$ = H | (bei IIIb) |
| $R^1 = C_6H_5$ | $R^3 = CH_3$ | $R^2, R^4, R^5$ = H | " |

Bevorzugte Verbindungen sind diejenigen der Formeln IIIa und IIIb, in welchen

$R^1$ = $(C_1-C_4)$-Alkyl, ggf. subst. - vorz. 1mal subst. - durch Cl und/oder Br,

$(C_1-C_4)$-Alkoxy, ggf. subst. - vorz. 1mal subst. - durch Cl und/oder Br oder

Phenyl,

$R^2$ = $R^5$ = H und

$R^3$, $R^4$ = unabhängig voneinander H, $CH_3$,

mit Ausnahme der vorher aufgeführten Ausnahmefälle.

Die neuen Verbindungen werden in gleicher Weise verwendet wie die bekannten Verbindungen dieser Verbindungsklasse, deren Verwendung eingangs beschrieben wurde.

Die Erfindung wird nun anhand der folgenden Beispiele weiter erläutert.

Beispiel 1:

In eine Lösung von 46.4 g (0.4 mol) 1-Methyl-1-oxo-$\Delta^3$-phospholen in 200 ml Wasser werden unter Außenkühlung bei 20 - 25 °C 28.4 g (0.4 mol) Chlor geleitet. Gleichzeitig wird eine Lösung von 32 g (0.8 mol) Natriumhydroxyd in 100 ml Wasser so zugetropft, daß der pH-Wert des Reaktionsgemisches während der Chlordosierung zwischen 3 und 5 bleibt. Anschließend wird die Restmenge Natriumhydroxydlösung schnell zugetropft und 15 min. ohne weitere Kühlung nachgerührt. Sodann wird neutralisiert, Wasser bei 40 °C/$1.6 \cdot 10^{-2}$ bar abgezogen und der Rückstand mit 200 ml Methylenchlorid verrührt. Filtrieren von ausgefallenem Salz und Entfernen des Lösungsmittels bei 30 °C/$2.0 \cdot 10^{-2}$ bar liefert 50.4 g (95,5 %) 3.4-Epoxy-1-methyl-1-oxo-phospholan vom Kp.125 °C/$1.3 \cdot 10^{-5}$ bar als farbloses, erstarrendes Öl.

$C_5H_9O_2P$ (132.10)

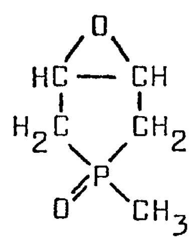

| | | | |
|---|---|---|---|
| Ber. | C 45.46; | H 6.87; | P 23.45 |
| Gef. | C 45.1; | H 6.7; | P 23.2 |

Beispiel 2:

Beispiel 1 wird wiederholt, nur daß die Gesamtmenge an Natriumhydroxyd nach Beendigung der Chlorzugabe zugetropft wird. Die Aufarbeitung liefert dann 49.3 g (93,4 %) 3.4-Epoxy-1-methyl-1-oxo-phospholan.

Der Vergleich der Beispiele 1 und 2 zeigt, daß bei dem erfindungsgemäßen Verfahren der Zeitpunkt der Zugabe der Base prinzipiell nicht kritisch für die Ausbeute an 3.4-Epoxy-1-methyl-1-oxo-phospholan ist.

Beispiel 3:

In eine Lösung von 46.4 g (0.4 mol) 1-Methyl-1-oxo-$\Delta^3$-phospholen in 200 ml Wasser werden unter Außenkühlung bei 20 - 25 °C 28.4 g (0.4 mol) Chlor eingeleitet. Gleichzeitig wird eine Lösung von 22.4 g (0.4 mol) Kaliumhydroxyd in 100 ml Wasser so zugetropft, daß der pH-Wert des Reaktionsgemisches stets zwischen 3 und 5 bleibt. Anschließend werden 800 ml (0.4 mol) einer 0.5 n alkoholischen Kaliumhydroxylösung zugegeben und 2 h ohne weitere Außenkühlung nachgerührt. Sodann wird neutralisiert, das Lösungsmittel bei 40 °C/$1.6 \cdot 10^{-2}$ bar abgezogen und der Rückstand mit 200 ml Methylenchlorid verrührt. Filtrieren vom ausgefallenen Salz und Entfernen des Lösungsmittels bei 30 °C/$2.0 \cdot 10^{-2}$ bar liefert 46.2 g (87,5 %) 3.4-Epoxy-1-methyl-1-oxo-phospholan.

Der Vergleich der Beispiele 1 und 3 zeigt, daß bei dem erfindungsgemäßen Verfahren auch Gemische von Wasser mit geeigneten organischen Lösungsmitteln verwendet werden können.

Beispiel 4:

Analog Beispiel 1 werden 52.0 g (0.4 mol) 1.3-Dimethyl-1-oxo-$\Delta^3$-phospholen in 200 ml Wasser mit 28.4 g (0.4 mol) Chlor und 32 g (0.8 mol) Natriumhydroxyd in 100 ml Wasser umgesetzt und aufgearbeitet. Die Aufarbeitung liefert 58 g (99,3 %) 1.3-Dimethyl-3.4-epoxy-1-oxo-phospholan als farbloses, erstarrendes Öl vom Kp. 104 °C/$1.3 \cdot 10^{-4}$ bar.

$C_6H_{11}O_2P$ (146.13)

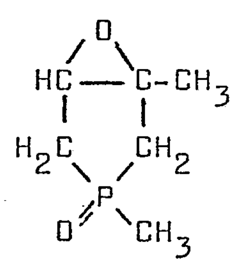

| | | | |
|---|---|---|---|
| Ber. | C 49.32; | H 7.59; | P 21.20 |
| Gef. | C 49.3; | H 7.3; | P 21.0 |

Beispiel 5:

Analog Beispiel 1 werden 71.2 g (0.4 mol) 1-Phenyl-1-oxo-$\Delta^3$-phospholen in 200 ml Wasser mit 28.4 g (0.4 mol) Chlor und 32 g (0.8 mol) Natriumhydroxyd in 100 ml Wasser umgesetzt und aufgearbeitet. Die Aufarbeitung liefert 72.2 g (93,0 %) 3.4-Epoxy-1-phenyl-1-oxo-phospholan als farblose Kristalle vom Fp. 109 °C (aus Äthylacetat).

$C_{10}H_{11}O_2P$ (194.17)

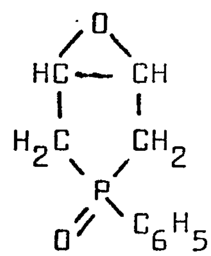

| | | | |
|---|---|---|---|
| Ber. | C 61.86; | H 5.71; | P 15.95 |
| Gef. | C 61.6; | H 5.7; | P 15.9 |

Beispiel 6:

Analog Beispiel 1 werden 76.8 g (0.4 mol) 3-Methyl-1-phenyl-1-oxo-$\Delta^3$-phospholen in 200 ml Wasser mit 28.4 g (0.4 mol) Chlor und 32 g (0.8 mol) Natriumhydroxyd in 100 ml Wasser umgesetzt und aufgearbeitet. Die Aufarbeitung liefert 82.1 g (98,7 %) 3.4-Epoxy-3-methyl-1-phenyl-1-oxo-phospholan als farblose Kristalle vom Fp. 143 °C (aus Äthylacetat).

$C_{11}H_{13}O_2P$ (208.20)

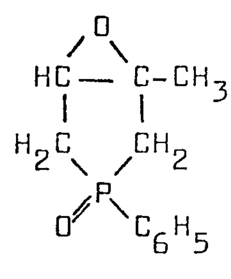

| | | | |
|---|---|---|---|
| Ber. | C 63.46; | H 6.29; | P 14.88 |
| Gef. | C 63.4; | H 6.2; | P 14.8 |

Beispiel 7:

Beispiel 6 wird wiederholt, nur daß statt 3-Methyl-1-phenyl-1-oxo- $\Delta^3$-phospholen jetzt das Isomere 3-Methyl-1-phenyl-1-oxo-$\Delta^2$-phospholen umgesetzt wird. Die Aufarbeitung liefert dann 77.3 g (92,9 %) 2.3-Epoxy-3-methyl-1-phenyl-1-oxo-phospholan als farblose Kristalle vom Fp. 104 °C (aus Tetrachlorkohlenstoff).

$C_{11}H_{13}O_2P$ (208,20)

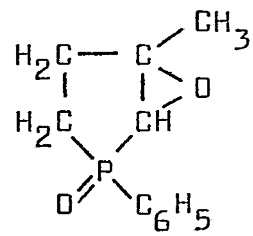

Ber. C 63.46; H 6.29; P 14.88

Gef. C 63.2; H 6.2; P 14.8

Der Vergleich der Beispiele 6 und 7 zeigt, daß das erfindungsgemäße Verfahren ohne nennenswerte Ausbeuteveränderungen zur Herstellung sowohl von 3,4-Epoxy-1-oxo-phospholanen wie auch von 2,3-Epoxy-1-oxo-phospholanen geeignet ist.

Beispiel 8:

Analog Beispiel 1 werden 82.4 g (0.4 mol) 3.4-Dimethyl-1-phenyl-1-oxo- $\Delta^3$-phospholen in 200 ml Wasser mit 28.4 g (0.4 mol) Chlor und 32 g (0.8 mol) Natriumhydroxyd in 100 ml Wasser umgesetzt. Neutralisation und 3malige Extraktion der wässrigen Phase mit je 200 ml Methylenchlorid liefern nach Abziehen des Lösungsmittels bei 30 °C/2.0·$10^{-2}$ bar 3.4-Dimethyl-3.4-epoxy-1-phenyl-1-oxo-phospholan als farblose Kristalle vom Fp. 115 °C (aus Äthylacetat).

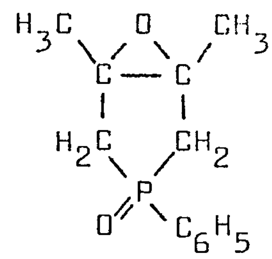

$C_{12}H_{15}O_2P$ (222.23)

Ber. C 64.86; H 6.80; P 13.94

Gef. C 64.8; H 6.8; P 13.6

<u>Beispiel 9:</u>

Analog Beispiel 1 werden 52.8 g (0.4 mol) 1-Methoxy-1-oxo-$\Delta^3$-phospholen in 200 ml Wasser mit 28.4 g (0.4 mol) Chlor und 32 g (0.8 mol) Natriumhydroxyd in 100 ml Wasser umgesetzt und aufgearbeitet. Die Aufarbeitung liefert dann 57.0 g (96,3 %) 3.4-Epoxy-1-methoxy-1-oxo-phospholan als farbloses Öl vom Kp. 79 - 80 $^oC/1.3 \cdot 10^{-4}$ bar.

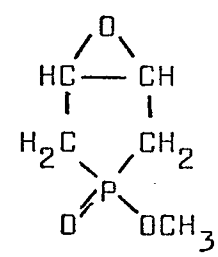

$C_5H_9O_3P$ (148.10)

Ber. C 40.55; H 6.12; P 20.91

Gef. C 40.5; H 6.0; P 20.8

<u>Beispiel 10:</u>

Die Umsetzung von Beispiel 9 wird wiederholt. Die Aufarbeitung erfolgt nach Neutralisation durch kontinuierliche Extraktion der wässrigen Phase mit 300 ml Methylenchlorid in einer Extraktionsapparatur und liefert nach Abziehen des Extraktionsmittels bei 30 $^oC/2.0 \cdot 10^{-2}$ bar 55.6 g (94,0 %) 3.4-Epoxy-1-methoxy-1-oxo-phospholan.

Der Vergleich der Beispiele 9 und 10 zeigt, daß bei dem erfindungsgemäßen Verfahren ohne Ausbeuteunterschiede im Prinzip die Wahl der Aufarbeitungsmethode frei ist.

Beispiel 11:

Analog Beispiel 1 werden 64.0 g (0.4 mol) 3.4-Dimethyl-1-methoxy-1-oxo-$\Delta^3$-phospholen in 200 ml Wasser mit 28.4 g (0.4 mol) Chlor und 32 g (0.8 mol) Natriumhydroxyd in 100 ml Wasser angesetzt und aufgearbeitet. Die Aufarbeitung liefert 68.2 g (96,9 %) 3.4-Dimethyl-3.4-epoxy-1-methoxy-1-oxo-phospholan als farbloses, erstarrendes Öl vom Kp. 128 - 131 $^{\circ}C/1.3 \cdot 10^{-5}$ bar.

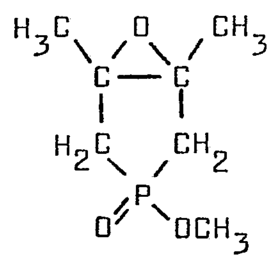

$C_7H_{13}O_3P$ (176.15)

Ber. C 47.73; H 7.44; P 17.58

Gef. C 47.5; H 7.5; P 17.4

Beispiel 12:

Analog Beispiel 1 werden 64.0 g (0.4 mol) 1-Äthoxy-3-methyl-1-oxo-$\Delta^3$-phospholen in 200 ml Wasser mit 28.4 g (0.4 mol) Chlor und 32 g (0.8 mol) Natriumhydroxyd in 100 ml Wasser umgesetzt und aufgearbeitet. Die Aufarbeitung liefert 67.6 g (96,3 %) 1-Äthoxy-3.4-epoxy-3-methyl-1-oxo-phospholan als farbloses Öl vom Kp. 103 $^{\circ}C/6.5 \cdot 10^{-5}$ bar.

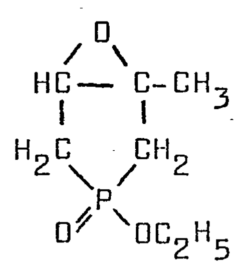

$C_7H_{13}O_3P$ (176.15)

Ber. C 47.73; H 7.44; P 17.58

Gef. C 47.3; H 7.3; P 16.9

Beispiel 13:

Beispiel 12 wird wiederholt, nur daß statt 1-Äthoxy-3-methyl-1-oxo-$\Delta^3$-phospholen jetzt das isomere 1-Äthoxy-3-methyl-1-oxo-$\Delta^2$-phospholen umgesetzt wird. Die Aufarbeitung liefert dann 65.3 g (92,7 %) 1-Äthoxy-2.3-epoxy-3-methyl-1-oxo-phospholan als farbloses Öl vom Kp. 125 - 128 $^oC/1.3 \cdot 10^{-5}$ bar.

$C_7H_{13}O_3P$ (176.15)

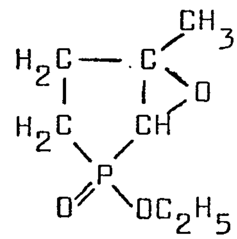

Ber. C 47.73; H 7.44; P 17.58

Gef. C 47.4; H 7.2; P 17.2

Zum Vergleich der Beispiele 12 und 13 siehe Bemerkung bei Beispiel 7.

Beispiel 14:

Analog Beispiel 1 werden 64.0 g (0.4 mol) 1-i-Propoxy-1-oxo-$\Delta^3$-phospholen in 200 ml Wasser mit 28.4 g (0.4 mol) Chlor und 32 g (0.8 mol) Natriumhydroxyd in 100 ml Wasser umgesetzt und aufgearbeitet. Die Aufarbeitung liefert 67.8 g (96,3 %) 3.4-Epoxy-1-i-propoxy-1-oxo-phospholan als farbloses Öl vom Kp. 117 $^oC/1.3 \cdot 10^{-5}$ bar.

$C_7H_{13}O_3P$ (176.15)

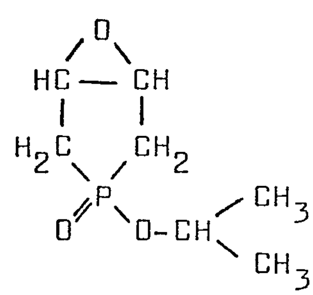

Ber. C 47.73; H 7.4; P 17.58

Gef. C 47.6; H 7.4; P 17.3

Beispiel 15:

Beispiel 14 wird wiederholt, nur daß statt reinem 1-i-Propoxy-1-oxo-$\Delta^3$-phospholen jetzt eine Mischung aus 1-i-Propoxy-1-oxo-$\Delta^3$- und 1-i-Propoxy-1-oxo-$\Delta^2$-phospholen, bestehend aus 61 % $\Delta^3$- und 39 % $\Delta^2$-Isomeren, umgesetzt wird. Die Aufarbeitung liefert dann 66.0 g (93,8 %) eines Gemisches von 3.4-Epoxy-1-i-propoxy- bzw. 2.3-Epoxy-1-i-propoxy-1-oxo-phospholan, welches nach $^1$H-NMR-spektroskopischer Untersuchung aus ca. 60 % 3.4-Epoxy- und 40 % 2.3-Epoxy-1-i-propoxy-1-oxo-phospholan besteht.

Der Vergleich der Beispiele 14 und 15 zeigt, daß bei dem erfindungsgemäßen Verfahren auch ohne Veränderung des Isomerenverhältnisses Mischungen aus 1-Oxo-$\Delta^2$- und 1-Oxo-$\Delta^3$-phospholenen eingesetzt werden können.

Beispiel 16:

Analog Beispiel 10 werden 69.6 g (0.4 mol) 1-Butoxy-1-oxo-$\Delta^3$-phospholen in 200 ml Wasser mit 28.4 g (0.4 mol) Chlor und 32 g (0.8 mol) Natriumhydroxyd in 100 ml Wasser umgesetzt und aufgearbeitet. Die Aufarbeitung liefert 68.0 g (91.9 %) 3.4-Epoxy-1-butoxy-1-oxo-phospholan als farbloses Öl vom Kp. 134 $^0$C/1.3·$10^{-5}$ bar.

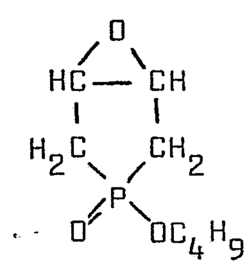

$C_8H_{15}O_3P$ (190.18)

Ber. C 50.53; H 7.95; P 16.29

Gef. C 50.2; H 7.8; P 15.9

Beispiel 17:

Analog Beispiel 1 werden 69.6 g (0.4 mol) 1-Äthoxy-3.4-dimethyl-1-oxo-$\Delta^3$-phospholen in 200 ml Wasser mit 28.4 g (0.4 mol) Chlor und 32 g (0.8 mol) Natriumhydroxyd in 100 ml Wasser umgesetzt und aufgearbeitet. Die Aufarbeitung liefert 74.8 g (98,4 %) 1-Äthoxy-3.4-dimethyl-3.4-epoxy-1-oxo-phospholan als farbloses, erstarrendes Öl vom Kp. 155 $^oC/6.0\cdot10^{-4}$ bar.

$C_8H_{15}O_3P$ (190.18)

Ber. C 50.53; H 7.95; P 16.29

Gef. C 50.3; H 7.8; P 15.5

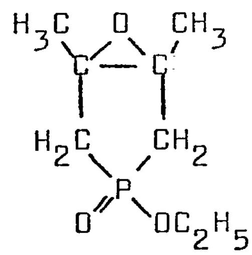

Beispiel 18:

Analog Beispiel 8 werden 72.2 g (0.4 mol) 1-β-Chloräthoxy-1-oxo-$\Delta^3$-phospholen in 200 ml Wasser mit 28.4 g (0.4 mol) Chlor und 32 g (0.8 mol) Natriumhydroxyd in 100 ml Wasser umgesetzt und aufgearbeitet. Die Aufarbeitung liefert 75.3 g (95,8 %) 1-β-Chloräthoxy-3.4-epoxy-1-oxo-phospholan als erstarrendes Öl vom Kp. 128 - 130 $^oC/1.3\cdot10^{-4}$ bar.

$C_6H_{10}ClO_3P$ (196.57)

Ber. C 36.66; H 5.13; P 15.76

Gef. C 36.4; H 4.9; P 15.8

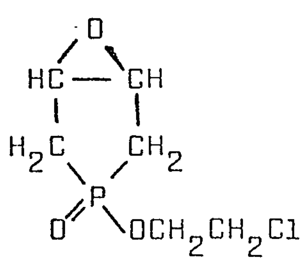

Patentansprüche:

1. Verfahren zur Herstellung von Epoxy-1-oxo-phospholanen, ausgehend von 1-Oxo-phospholenen, dadurch gekennzeichnet, daß man 1-Oxo-phospholene mit Chlor in Gegenwart von Chlorwasserstoff bindenden Basen im Molverhältnis von etwa 1:1:2 in Wasser, gegebenenfalls im Gemisch mit einem mit Wasser mischbaren inerten organischen Lösungsmittel, ohne Isolierung einer Zwischenstufe im Einstufenverfahren umsetzt.

2. Verfahren nach Anspruch 1, dadurch gekennzeichnet, daß man 1-Oxo-phospholene Verbindungen der nachstehenden Formeln IIa und/oder IIb verwendet:

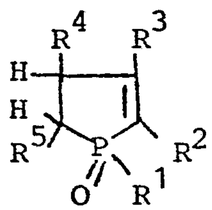

(IIa)

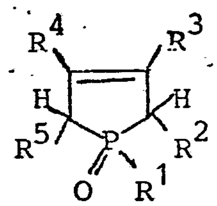

(IIb)

worin

$R^1$ = $(C_1-C_{12})$-Alkyl, ggf. subst. durch Cl und/oder Br
$(C_1-C_{12})$-Alkoxy, ggf. subst. durch CL und/oder Br.
Cyclopentyl, Cyclohexyl, Phenyl, Naphthyl, Cyclopentoxy, Cyclohexoxy, Phenoxy, Naphthoxy } ggf. subst. durch $(C_1-C_4)$-Alkyl, $(C_1-C_4)$-Alkoxy, Cl und/oder Br

$R^2$, $R^3$, $R^4$, $R^5$ = unabhängig voneinander H, $(C_1-C_4)$-Alkyl, $(C_1-C_4)$-Alkoxy, Phenyl, Cl, Br, bedeuten.

3. Verfahren nach den Ansprüchen 1 bis 2, dadurch gekennzeichnet, daß man als 1-Oxo-phospholene solche Ver-

bindungen der Formeln IIa und/oder II b verwendet, in denen
$R^1$ = ($C_1$-$C_4$-Alkyl, ggf. subst. durch Cl und/oder Br, ($C_1$-$C_4$)-Alkoxy, ggf. subst. durch Cl und/oder Br, oder Phenyl,
$R^2$ = $R^5$ = H und
$R^3$, $R^4$ = unabhängig voneinander H, $CH_3$, bedeuten.

4. Verfahren nach den Ansprüchen 1 bis 3, dadurch gekennzeichnet, daß man als Chlorwasserstoff bindende Basen Alkalihydroxide, -carbonate, -hydrogencarbonate, Ammoniak und/oder niedere aliphatische Amine verwendet.

5. Verfahren nach den Ansprüchen 1 bis 4, dadurch gekennzeichnet, daß man als mit Wasser mischbare Lösungsmittel niedere Alkohole, niedere aliphatische Ketone und/oder wasserlösliche Äther verwendet.

6. Verfahren nach den Ansprüchen 1 bis 5, dadurch gekennzeichnet, daß man die Umsetzung im Temperaturbereich von etwa -10 bis +100°C, vorzugsweise von etwa 0 bis 50°C, durchführt.

7. Verfahren nach den Ansprüchen 1 bis 6, dadurch gekennzeichnet, daß man während der Umsetzung einen pH-Bereich von etwa 3 bis 9 aufrecht erhält.

8. Epoxy-1-oxo-phospholane der Formeln IIIa und IIIb

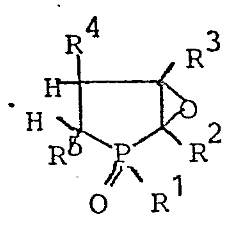

(IIIa)

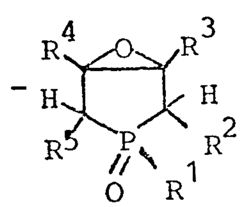

(IIIb)

worin die Reste $R^1$ bis $R^5$ die gleiche Bedeutung wie in den Formeln IIa und IIb besitzen,

mit Ausnahme der Fälle

| | | | |
|---|---|---|---|
| $R^1 = CH_3$ | $R^2-R^5 = H$ | | (bei IIIa) |
| $R^1 = OC_6H_5$ | $R^2-R^5 = H$ | | " |
| $R^1 = OC_2H_5$ | $R^2 = CH_3$ | $R^3-R^5 = H$ | " |
| $R^1 = OCH_3$ | $R^3 = CH_3$ | $R^2, R^4, R^5 = H$ | " |
| $R^1 = OC_2H_5$ | $R^3 = CH_3$ | $R^2, R^4, R^5 = H$ | " |
| $R^1 = OC_3H_7$ | $R^3 = CH_3$ | $R^2, R^4, R^5 = H$ | " |
| $R^1 = OC_4H_9$ | $R^3 = CH_3$ | $R^2, R^4, R^5 = H$ | " |
| $R^1 = C_6H_5$ | $R^3, R^4 = CH_3$ | $R^2, R^5 = H$ | " |
| $R^1 = OC_6H_5$ | $R^3, R^4 = CH_3$ | $R^2, R^5 = H$ | " |
| $R^1 = OC_2H_5$ | $R^3, R^4 = CH_3$ | $R^2, R^5 = H$ | " |
| $R^1 = OC_4H_9$ | $R^3, R^4 = CH_3$ | $R^2, R^5 = H$ | " |
| $R^1 = OC_2H_5$ | $R^3 = CH_3$ | $R^2, R^4, R^5 = H$ | (bei IIIb) |
| $R^1 = C_6H_5$ | $R^3 = CH_3$ | $R^2, R^4, R^5 = H$ | " |

9. Epoxy-1-oxo-phospholane nach Anspruch 8, dadurch gekennzeichnet, daß in den Formeln IIIa und IIIb

$R^1$ = $(C_1-C_4)$-Alkyl, ggf. subst. - vorz. 1x subst. - durch Cl und/oder Br,
$(C_1-C_4)$-Alkoxy, ggf. subst. -vorz. 1x subst. - durch Cl und/oder Br; oder
Phenyl,
$R^2 = R^5 = H$ und
$R^3$, $R^4$ = unabhängig voneinander H, $CH_3$, bedeuten,

mit Ausnahme der in Anspruch 8 aufgeführten Ausnahmefälle.